# EUROPÄISCHE PATENTSCHRIFT

(11) **EP 0 615 536 B1**
(45) Veröffentlichungstag und Bekanntmachung des Hinweises auf die Patenterteilung: **21.08.1996**
(21) Anmeldenummer: 92923766.7
(22) Anmeldetag: 21.11.1992
(51) Int. Cl.: C09D 17/00, C09C 1/00

(54) **PIGMENTZUBEREITUNG**
PIGMENT COMPOSITION
COMPOSITION DE PIGMENTS

(30) Priorität: 04.12.1991 DE 4139993
(43) Veröffentlichungstag der Anmeldung: 21.09.1994
(73) Patentinhaber: MERCK PATENT GmbH, D-64271 Darmstadt (DE)
(72) Erfinder: HERGET, Gerhard, D-6105 Ober Ramstadt (DE); STAHLECKER, Otto, D-6100 Darmstadt (DE); KIESER, Manfred, D-6100 Darmstadt (DE)
(86) Internationale Anmeldenummer: EP9202683
(87) Internationale Veröffentlichungsnummer: WO9311199

(56) Entgegenhaltungen:
- FR-A- 2 146 484
- FR-A- 2 354 300
- PATENT ABSTRACTS OF JAPAN vol. 4, no. 155 (C-029)29. Oktober 1980 & JP,A,55 099 975

## Beschreibung

Die Erfindung betrifft eine nichtstaubende, homogene Pigmentzubereitung.

In technischen Prozessen werden Pigmente vielfach nicht als Pulver eingesetzt, da diese stauben, was zu erhöhten Anforderungen im Hinblick auf die Arbeitsplatzsicherheit führt. Weiterhin wird bei der Einbringung von Pulvern in Kunststoffe, Basislacksysteme etc. vielfach eine Agglomeration des Pigmentpulvers beobachtet und eine homogene Verteilung des Pigments in der jeweiligen Matrix ist nur schwer oder aber gar nicht zu erreichen.

Anstelle des Pigmentpulvers werden nicht staubende Pigmentzubereitungen verwendet. Die Komponenten der Zubereitung sollten dabei so gewählt sein, daß die Zubereitung möglichst gut auf die anderen Komponenten des jeweiligen Beschichtungssystem abgestimmt ist und sich nach der Einbringung z.B. leicht homogen verteilt.

Wäßrige Pigmentzubereitungen, die schon immer z.B. für Kosmetika benötigt wurden, werden aus Umweltschutzgründen zunehmend auch für andere Applikationen, etwa für die Herstellung von Wasserlacken etc., bedeutsam.

Neben einer guten Kompatibilität mit den weiteren Bestandteilen des Beschichtungssystems müssen Pigmentzubereitungen eine hohe Stabilität aufweisen, d.h. sie dürfen nicht zur Phasenseparation neigen. Diese Forderung ist besonders wichtig bei Pigmentzubereitungen auf der Basis plättchenförmiger Pigmente, da diese auf Grund ihrer Struktur bei der Phasenseparation zum "zusammenbacken" neigen und nur schwer wieder aufgerührt werden können und da das Entmischungsphänomen in besonders ausgeprägter Form in Pigmentzubereitungen auftritt, welche plättchenförmige Pigmente enthalten. So weist z.B. eine wäßrige Pigmentzubereitung, welche durch Anteigen eines Pulvers aus plättchenförmigen Perlglanzpigmenten mit Wasser erhalten wird, eine unzureichende Stabilität auf.

In der FR 2,146,484 wird eine flüssige Titandioxidpigment-aufschlämmung beschrieben, die sich dadurch auszeichnet, daß sie einen Feststoffgehalt von 60 - 80 Gew.% aufweist. Die beanspruchte Aufschlämmung enthält neben den nicht-plättchenförmigen TiO₂-Pigmenten, die eine Teilchengröße von ≤ 4 µm aufweisen, ein Ausflockungsmittel und ein Dispergiermittel.

Die bisher zur Verwendung in Wäßrigen Beschichtungssystemen entwickelten Pigmentzubereitungen auf der Basis plättchenförmiger Pigmente genügen den beschriebenen Anforderungen nur unzureichend.

Die Aufgabe der vorliegenden Erfindung bestand daher in der Bereitstellung von Pigmentzubereitungen auf der Basis plättchenförmiger Pigmente, welche
* in wäßrigen Beschichtungssysteren verwendet werden können,
* eine hohe Stabilität aufweisen, und
* durch eine hohe Kompatibilität nit den übrigen Komponenten des Beschichtungssystems gekennzeichnet sind.

Es wurde gefunden, daß diese Aufgabe durch die Bereitstellung der erfindungsgemäßen Präparationen gelöst werden kann.

Gegenstand der Erfindung sind somit nichtstaubende, homogene Pigmentzubereitungen zur Anwendung in wäßrigen BeschichtungsSystemen, welche
- mindestens 70 Gew.% eines oder mehrerer plättchenförmiger Pigmente,
- 1-30 Gew.% Wasser,
- 0,1-20 Gew,% eines Feuchthaltemittels und
- 0,005 bis 0,25 Gew.% eines oder mehrerer Konservierungsmittel
enthalten.

Als plättchenförmige Pigmente werden vorzugsweise Interferentpigmente auf der Basis plättchenförmiger, transparenter oder semitransparenter Substrate aus z.B. Schichtsilikaten wie etwa Glimmer, Talkum, Kaolin, aus Glas oder anderen silikatischen Materialien verwendet, welche mit einer oder mehreren Schichten aus mindestens einem Metalloxid bzw. -oxidhydrat überzogen sind. Dabei enthält zumindestens eine dieser Schichten vorzugsweise ein oder mehrere hochbrechende Metalloxide bzw. -oxidhydrate, welche aus der folgenden Gruppe ausgewählt sind:
Titanoxid, Zinnoxid, Zirkonoxid, Zinkoxid, Eisenoxid, Chromoxid, Nickeloxid, Cobaltoxid bzw. die entsprechenden Oxidhydrate

Weiterhin können auch plättchenförmige Metalloxide wie z.B. plättchenförmiges Eisenoxid oder Wismutoxychlorid in den erfindungsgemäßen Pigmentzubereitungen eingesetzt werden.

Als plättchenförmige Pigmente können auch Metallplättchen benutzt werden, die unbeschichtet sein können oder auch mit einer oder mehreren Metalloxidschichten bedeckt sein können; bevorzugt sind z.B. Al-, Cr-, Fe-, Au-, Ag- und Stahlplättchen. Sollen korrosionsanfällige Metallplättchen wie z.B. Al-, Fe- oder Stahlplättchen unbeschichtet eingesetzt werden, werden sie vorzugsweise mit einer schützenden Polymerschicht überzogen.

Diese plättchenförmigen Pigmente sind bekannt und sie sind größtenteils kommerziell erhältlich und/oder sie können nach dem Fachmann bekannten Standardverfahren hergestellt werden. Interferenzpigmente auf der Basis transparenter oder semitransparenter plättchenförmiger Substrate (Perlglanzpigmente) sind z.B. beschrieben in den deutschen Patenten und Patentan meldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602 und 32 35 017.

Die erfindungsgemäßen Pigmente können ein oder mehrere plätt chenförmige Pigmente enthalten; vielfach können durch die Verwendung von mindestens zwei verschiedenen Pigmenten besondere Effekte erzielt werden. Der Massenanteil der plättchenförmigen Pigmente an den erfindungsgemäßen Farbmittelzuberei tungen beträgt nicht weniger als 70 Gew.% und insbesondere mindestens 80 Gew.%; besonders bevorzugt sind erfindungsgemäße Farbmittelzubereitungen mit einem Pigment-Massenantei von mehr als 85 Gew.%.

Es wurde nun gefunden, daß nichtstaubende, homogene Farbmittelzubereitungen erhalten werden, wenn die plättchenförmigen Pigmente mit Wasser und mit einem Feuchthaltemittel versetzt werden.

Das Feuchthaltemittel besteht vorzugsweise aus einer oder mehreren Verbindungen, welche ausgewählt werden aus der folgende Verbindungen umfassenden Gruppe:
Glycerin, substituierte Glycerine, Sorbit, Polyethylenglykole, Polyvinylpyrrolidone und Polypropylenglycole

Diese Aufzählung soll die Erfindung erläutern, ohne sie zu begrenzen. Neben den aufgezählten Verbindungen können auch noch weitere Substanzen, insbesondere Polyhydroxyverbindungen, verwendet werden.

Ganz besonders bevorzugte Feuchthaltemittel enthalten Glycerin, substituierte Glycerine und/oder Sorbit.

Die durch den gleichzeitigen Zusatz von Wasser und einem Feuchthaltemittel zu den plättchenförmigen Pigmenten erhalte nen Farbmittelzubereitungen weisen eine hohe Stabilität auf und eine Phasenseperation wird auch nach Standzeiten von meh als einigen Monaten und mehr nicht beobachtet. Im Unterschie dazu sind herkömmliche, wäßrige Farbmittelzubereitungen, bei denen zu den plättchenförmigen Pigmenten lediglich Wasser zugesetzt wird, deutlich instabiler und weisen bereits nach einigen Tagen bis wenigen Wochen eine deutliche Phasensepara tion auf, wobei sich das Wasser i.a. in Richtung zum Boden des Vorratsbehältnis ansammelt.

Der Massenanteil des Feuchthaltemittels an der erfindungsgemäßen Pigmentzubereitung beträgt zwischen 0,1-20 Gew.% und insbesondere zwischen 0,5 und 15 Gew.%, Der Wasseranteil liegt zwischen 1 und 30 Gew.% und insbesondere zwischen 2,5 und 25 Gew.%.

Es wurde gefunden, daß das Verhältnis aus den Massenanteilen von Wasser und Feuchthaltemittel in einem weiten Bereich variiert werden kann, ohne die Stabilität der erfindungsgmäßen Pigmentzubereitung zu beeinträchtigen, solange nur die Summe der Massenanteile von Wasser und dem Feuchthaltemittel zwischen 1 und 30 Gew.% liegt. Pigmentzubereitungen, bei denen die Summe dieser Massenanteile nicht kleiner ist als 5 % und insbesondere mindestens 7,5 % beträgt, weisen in der Regel besonders günstige Eigenschaften auf; dabei beträgt der Massenanteil des Feuchthaltemittels ganz besonders bevorzugt nicht weniger als 5 %, da die nichtstaubende Ausrüstung der erfindungsgemäßen Pigmentzubereitungen dann i.a. besonders ausgeprägt ist. Die Summe der Massenprozente von Wasser und Feuchthaltemittel werden vorzugsweise so niedrig gewählt, daß die Pigmentpräparation keine kontinuierliche flüssige Phase aufweist.

Es wurde beobachtet, daß Pigmentzubereitungen, enthaltend plättchenförmige Pigmente, Wasser und ein Feuchthaltemittel insbesondere bei längerer Lagerung und/oder bei höheren Wasseranteilen und/oder insbesondere bei einer Kontamination mit organischem Material zur Keimbildung neigen, wodurch die Verwendung derartiger Pigmentzubereitungen für wichtige Applikationsbereiche, wie z.B. die Verwendung in kosmetischen Präparaten, in Druckfarben für Lebensmittelverpackungen oder auch weiteren Bereichen, stark eingeschränkt ist.

Es wurde nun gefunden, daß durch den Zusatz einer geringen Menge eines oder mehrerer Konservierungsmittels die Keimbildungstendenz stark unterdrückt wird, ohne daß die anderen vorteilhaften Eigenschaften der Pigmentzubereitungen, u.a. insbesondere deren Stabilität, nachteilig beeinflußt wird.

Der Massenanteil des oder der Konservierungsmittel an der erfindungsgemäßen Pigmentzubereitung ist kleiner als 1,00 Gew.% und beträgt insbesondere zwischen 0,005 und 0,25 Gew.%.

Das bzw. die Konservierungsmittel werden bevorzugt ausgewählt aus der folgenden Gruppe von Konservierungsmitteln:
Sorbinsäure, Benzoesäure, PHB-Ester, Ameisensäure, Propionsäure

Diese Liste besonders geeigneter Konservierungsmittel soll die Erfindung lediglich erläutern und nicht begrenzen. Daneben können auch weitere Konservierungsmittel verwendet werden, die z.B. ausgewählt werden können aus den in Lackrohstofftabellen, 1987, Hannover, Curt V. Verlag angegebenen Konservierungsmitteln.

Die Herstellung der erfindungsgemäßen Pigmentzubereitungen erfolgt einfach dadurch, daß zu dem bzw. den plättchenförmigen Pigmenten Wasser, das Feuchthaltemittel und die Konservierungskomponente hinzugegeben werden, und daß diese Mischung in einem Mischgerät, insbesondere einem Pulvermischgerät, schonend homogenisiert wird. Dabei hat es sich als vorteilhaft herausgestellt, das Feuchthaltemittel sowie das Wasser nicht auf einmal , sondern unter Rühren kontinuierlich hinzuzugeben. Die Konservierungskomponente wird in der Regel im Wasser gelöst, und das Feuchthaltemittel und das Wasser können getrennt oder auch als Mischung zugegeben werden. Die Zugabe über eine Sprüheinrichtung ist von Vorteil.

Die erfindungsgemäßen Pigmentzubereitungen zeichnen sich
* durch eine gute Kompatiblität mit den Übrigen Komponenten wäßriger Beschichtungssysteme
* durch Staubfreiheit
* durch eine hohe Stabilität
* eine gute Verarbeitbarkeit und
* keine oder nur eine sehr geringe Keimbildungsneigung auf
und sie sind herkömmlichen Pigmentzubereitungen deutlich überlegen.

Die erfindungsgemäßen Pigmentzubereitungen können für vielfältige Anwendungen verwendet werden. Bevorzugt werden sie in wäßrigen Beschichtungssystemen aus den Bereichen Druck, Lack und Kosmetik eingesetzt. Besonders bevorzugt werden die Pigmentzubereitungen zur Herstellung von Kosmetika und zum Bedrucken von Lebensmittelpackungen und Textilien verwendet. Ein weiteres wichtiges Applikationsgebiet sind daneben auch Wasserlacke.

Den erfindungsgemäßen Pigmentzubereitungen kommt somit eine erhebliche wirtschaftliche Bedeutung zu.

Die nachfolgenden Beispiele sollen die Erfindung erläutern, ohne sie zu begrenzen.

### Beispiel 1

Eine Pigmentzubereitung, enthaltend 9 kg des plättchenförmigen Perlglanzpigments Iriodin® 550 (Handelsprodukt der Fa. E. Merck, Darmstadt; mit Eisen(III)-oxid beschichteter Glimmer), 100 g Glycerin, 1 g Kaliumsorbat, 0,3 g Propyl-4-hydroxybenzoat Natriumsalz (PHB-Ester) und 900 g destilliertes Wasser, staubt nicht, weist eine hohe Stabilität auf und zeigt keine Tendenz zur Keimbildung.

### Beispiel 2

Eine Pigmentzubereitung, enthaltend 9 kg des plättchenförmigen Perlglanzpigments Iriodin® 300 (Handelsprodukt der Fa. E. Merck, Darmstadt; mit Eisen(III)-oxid und Titan(IV)-oxid beschichteter Glimmer), 100 g Glycerin, 1 g Kaliumsorbat, 0,3 g Propyl-4-hydroxybenzoat Natriumsalz (PHB-Ester) und 900 g destilliertes Wasser, staubt nicht, weist eine hohe Stabilität auf und zeigt keine Tendenz zur Keimbildung.

### Beispiel 3

Eine Pigmentzubereitung, enthaltend 9 kg des plättchenförmigen Perlglanzpigments Iriodin® 320 (Handelsprodukt der Fa. E. Merck, Darmstadt; mit Eisen(III)-oxid und titan(IV)-oxid beschichteter Glimmer), 100 g Glycerin, 1 g Kaliumsorbat, 0,3 g Propyl-4-hydroxybenzoat Natriumsalz (PHB-Ester) und 900 g destilliertes Wasser, staubt nicht, weist eine hohe Stabilität auf und zeigt keine Tendenz zur Keimbildung.

### Beispiel 4

Eine Pigmentzubereitung, enthaltend 9 kg des plättchenförmigen Perlglanzpigments Iriodin® 163 (Handelsprodukt der Fa. E. Merck, Darmstadt; mit Titan(IV)-oxid beschichteter Glimmer), 100 g Glycerin, 1 g Kaliumsorbat, 0,3 g Propyl-4-hydroxybenzoat Natriumsalz (PHB-Ester) und 900 g destilliertes Wasser, staubt nicht, weist eine hohe Stabilität auf und zeigt keine Tendenz zur Keimbildung.

### Beipiel 5

Eine Pigmentzubereitung, enthaltend 9 kg des plättchenförmigen Perlglanzpigments Iriodin® 120 (Handelsprodukt der Fa. E. Merck, Darmstadt; mit Titan(IV)-oxid beschichteter Glimmer), 100 g Glycerin, 1 g Kaliumsorbat, 0,3 g Propyl-4-hydroxybenzoat Natriumsalz (PHB-Ester) und 900 g destilliertes Wasser, staubt nicht, weist eine hohe Stabilität auf und zeigt keine Tendenz zur Keimbildung.

### Beispiel 6

Eine Pigmentzubereitung, enthaltend 9 kg des plättchenförmigen Perlglanzpigments Iriodin® 100 (Handelsprodukt der Fa. E. Merck, Darmstadt; mit Titan(IV)-oxid beschichteter Glimmer), 100 g Glycerin, 1 g Kaliumsorbat, 0,3 g Propyl-4-hydroxybenzoat Natriumsalz (PHB-Ester) und 900 g destilliertes Wasser, staubt nicht, weist eine hohe Stabilität auf und zeigt keine Tendenz zur Keimbildung.

### Beispiel 7

Eine Pigmentzubereitung, enthaltend 9 kg des plättchenförmigen Perlglanzpigments Iriodin® 103 (Handelsprodukt der Fa. E. Merck, Darmstadt; mit Zinn(IV)-oxid und Titan(IV)-oxid beschichteter Glimmer), 100 g Glycerin, 1 g Kaliumsorbat, 0,3 g Propyl-4-hydroxybenzoat Natriumsalz (PHB-Ester) und 900 g destilliertes Wasser, staubt nicht, weist eine hohe Stabilität auf und zeigt keine Tendenz zur Keimbildung.

### Beispiel 8

Eine Pigmentzubereitung, enthaltend 9 kg des plättchenförmigen Perlglanzpigments Iriodin® 123 (Handelsprodukt der Fa. E. Merck, Darmstadt; mit Zinn(IV)-oxid und Titan(IV)-oxid beschichteter Glimmer), 100 g Glycerin, 1 g Kaliumsorbat, 0,3 g Propyl-4-hydroxybenzoat Natriumsalz (PHB-Ester) und 900 g destilliertes Wasser, staubt nicht, weist eine hohe Stabilität auf und zeigt keine Tendenz zur Keimbildung.

## Patentansprüche

1. Nichtstaubende, homogene Pigmentzubereitung, enthaltend
- mindestens 70 Gew. % eines oder mehrerer plättchenförmiger Pigmente,
- 1-30 Gew. % Wasser,
- 0,1 - 20 Gew. % eines Feuchthaltemittels und
- 0,005 - 0,25 Gew. % eines oder mehrerer Konservierungsmittel.

2. Zubereitung nach Anspruch 1, wobei die Summe aus dem Massenanteil von Wasser und dem Massenanteil des Feuchthaltemittels zwischen 1 und 30 Gew. % beträgt.

3. Zubereitung nach einem der Ansprüche 1 oder 2, wobei das Feuchthaltemittel eine oder mehrere Verbindungen, ausgewählt aus der Glycerin, substituierte Glycerine, Sorbit, Polyethylenglykole, Polyvinylpyrrolidone und/oder Polypropylenglykole umfassenden Gruppe, enthält.

4. Zubereitung nach einem der Ansprüche 1-3, wobei das Konservierungsmittel eine oder mehrere Verbindungen, ausgewählt aus der Sorbinsäure, Benzoesäure, PHB-Ester, Ameisensäure und/oder Propionsäure umfassenden Gruppe, enthält.

5. Zubereitung nach einem der Ansprüche 1-4, dadurch gekennzeichnet, daß das plättchenförmige Pigment ein Perlglanzpigment, Eisenoxid oder Wismutoxychlorid ist.

6. Verfahren zur Herstellung einer Zubereitung nach einem der Ansprüche 1-5, dadurch gekennzeichnet, daß zu dem plättchenförmigen Pigment Wasser, das Feuchthaltemittel sowie das Konservierungsmittel zugegeben werden, und daß die Mischung in einem Pulvermischgerät schonend homogenisiert wird.

7. Verwendung der Pigmentzubereitung nach Anspruch 1 in einem wäßrigen Beschichtungssystem.

8. Verwendung der Pigmentzubereitung nach Anspruch 1 in Wasserlacken, zur Herstellung von Kosmetika, Bedrucken von Lebensmittelpackungen und Textilien.

## Claims

1. Non-dusting, homogeneous pigment preparation containing
- at least 70% by weight of one or more flaky pigments,
- 1-30% by weight of water,
- 0.1-20% by weight of a humectant, and
- 0.005 - 0.25% by weight of one or more preservatives.

2. Preparation according to Claim 1, wherein the sum total of the weight proportion of water and weight proportion of humectant is between 1 and 30% by weight.

3. Preparation according to either of Claims 1 and 2, wherein the humectant comprises one or more compounds selected from the group consisting of glycerol, substituted glycerols, sorbitol, polyethylene glycols, polyvinylpyrrolidones and/or polypropylene glycols.

4. Preparation according to any one of Claims 1-3, wherein the preservative comprises one or more compounds selected from the group consisting of sorbic acid, benzoic acid, PHB ester, formic acid and/or propionic acid.

5. Preparation according to any one of Claims 1-4, characterized in that the flaky pigment is a pearl lustre pigment, iron oxide or bismuth oxychloride.

6. Process for preparing a preparation according to any one of Claims 1-5, characterized in that the flaky pigment is admixed with water, the humectant and the preservative and the mixture is gently homogenised in a powder mixer.

7. Use of the pigment preparation of Claim 1 in aqueous coating systems.

8. Use of the pigment preparation of Claim 1 in waterborne paints, for making cosmetics, printing food packages and textiles.

## Revendications

1. Préparation de pigment homogène non poudrante contenant
- au moins 70% en poids d'un ou plpusieurs pigments en forme de paillettes,
- 1-30% en poids d'eau,
- 0,1-20% en poids d'un humidifiant et
- 0,005-0,25% en poids d'un ou plusieurs agents de conservation.

2. Préparation selon la revendication 1, dans laquelle la somme des proportions massiques d'eau et d'humidifiant se situe entre 1 et 30% en poids.

3. Préparation selon l'une des revendications 1 ou 2, dans laquelle l'humidifiant contient un ou plusieurs composés choisis parmi la glycérine, les gylcérines substituées, le sorbitol, les polyéthylèneglycols, les polyvinylpyrrolidones et/ou les polypropylèneglycols.

4. Préparation selon l'une des revendications 1-3, dans laquelle l'agent de conservation contient un ou plusieurs composés choisis parmi l'acide sorbique, l'acide benzoïque, les esters d'acides polyhydroxybenzoïques (PHB), l'acide formique et/ou l'acide propionique.

5. Préparation selon l'une des revendications 1-4, caractérisée en ce que le pigment en forme de paillettes est un pigment nacré, de l'oxyde de fer ou de l'oxychlorure de bismuth.

6. Procédé de préparation d'une préparation selon l'une des revendications 1-5, caractérisé en ce qu'au pigment en forme de paillettes on ajoute de l'eau, l'humidifiant ainsi que l'agent de conservation, et en ce qu'on homogénéise le mélange avec ménagement dans un mélangeur pulvérisant.

7. Utilisation de la préparation de pigment selon la revendication 1 dans un système de revêtement aqueux.

8. Utilisation de la préparation de pigment selon la revendication 1 dans les vernis aqueux, pour la préparation de cosmétiques, l'impression d'emballages pour aliments et les textiles.
